# EUROPEAN PATENT SPECIFICATION

(11) **EP 3 103 598 B1**
(45) Date of publication and mention of the grant of the patent: **28.08.2019**
(21) Application number: 16000492.5
(22) Date of filing: 01.03.2016
(51) Int. Cl.: B26B 15/00, A01G 3/037

(54) **ELECTRICAL SCISSORS**
ELEKTRISCHE SCHERE
CISEAUX ÉLECTRIQUES

(30) Priority: 08.06.2015 JP 2015115991
(43) Date of publication of application: 14.12.2016
(73) Proprietor: Makita Corporation, Anjo-shi, Aichi 446-8502 (JP)
(72) Inventor: KAZUYA, Kato, Aichi 446-8502 (JP); KOJI, Haneda, Aichi 446-8502 (JP); MASAKI, Kondo, Aichi 446-8502 (JP)
(74) Representative: Müller-Boré & Partner Patentanwälte PartG mbB

(56) References cited:
- EP-A1- 2 163 853
- EP-A1- 2 746 002
- WO-A1-2007/059544
- CN-A- 103 181 300
- US-A1- 2013 247 384

## Description

### Technical Field

The present invention relates to electric scissors for cutting stems and/or branches of plants such as grasses, flowers, and trees in agriculture and gardening, for example.

### Background

Patent Document 1 discloses electric scissors for cutting stems and/or branches of plants such as grasses, flowers, and trees in agriculture and gardening, for example. The electric scissors include, in a cylindrical casing, an electric motor, an external thread, a nut, a stationary blade, and a movable blade. The external thread rotates when driven by the electric motor in the casing. The nut is screwed on the external thread to helically move back and forth in the casing. The stationary blade is fixed at the front of the casing. The movable blade pivots in accordance with the helical back and forth movement of the nut. In these electric scissors, the drive of the electric motor allows the nut to helically move back and forth on the external thread between a first position and a second position. When the nut is in the first position, the movable blade is open to keep a distance from the stationary blade. When the nut is in the second position, the movable blade is closed to overlap with the stationary blade.

This pair of electric scissors includes a control lever that allows the movable blade to pivot between the open state and the closed state. The control lever is movable between an opening position and a closing position. In the opening position, the control lever brings the nut to the first position to open the movable blade. In the closing position, the control lever brings the nut to the second position to close the movable blade. The electric scissors also include a magnetic sensor and a sensing medium. The magnetic sensor detects movement of the control lever from the opening position to the closing position. The sensing medium is a magnet that allows the magnetic sensor to detect the movement of the control lever from the opening position to the closing position. When manipulation force is not applied, which brings the control lever to the closing position, the sensing medium is biased to the control lever by the biasing member. Moving the control lever from the opening position to the closing position pushes the sensing medium to the closing position against the biasing force of the biasing member. Once the detector detects the movement of the sensing medium to the closing position, the electric motor is activated to bring the nut from the first position to the second position, thereby closing the movable blade.

In cutting stems and/or branches of plants, these electric scissors are, for example, used as follows. While the stems and/or branches are sandwiched between the stationary blade and the movable blade, an operator moves the control lever from the opening position to the closing position with his/her hand and fingers. Then, the detector detects the movement of the control lever to the closing position. Upon the detection, the electric motor allows the external thread to rotate clockwise to bring the nut from the first position to the second position. The movement of the nut from the first position to the second position allows the movable blade to pivot from the open state to the closed state, thereby cutting the stems and/or branches between the stationary blade and the movable blade. When the manipulation force is removed from the control lever in the closing position, the sensing medium at the control lever is biased by the biasing member to the opening position. Then, the detector detects that the control lever has not moved to the closing position. Upon the detection, the electric motor allows the external thread to rotate counterclockwise to bring the nut from the second position to the first position. The movement of the nut from the second position to the first position allows the movable blade to pivot from the closed state back to the open state.

### Citation List

### Patent Literature

[Patent Document 1] Japanese Patent No. 2735218

US 2013/0247384 A1 discloses electric scissors provided with: a first blade; a second blade; a toggle link mechanism including a first link, a second link, and a drive shaft; and a drive section. One end of the first link is rotatably connected to a transmission portion of the first blade. One end of the second link is rotatably connected to a transmission portion of the second blade. The other end of the first link is rotatably connected to the other end of the second link through the drive shaft. The drive section is configured to open/close the first blade and the second blade by displacing the drive shaft in a direction perpendicular to an axial direction of the drive shaft.

### Summary

### Technical Problem

In the electric scissors of Patent Document 1, the movable blade is supported at the front of the casing to be pivotable between the open state and the closed state. Moving the control lever from the opening position to the closing position allows the movable blade to pivot from the open state to the closed state, thereby cutting the stems and/or branches of plants
between the stationary blade and the movable blade. In such electric scissors, the movable blade has a pivot angle large enough to cut relatively thick stems and/or branches. On the other hand, when these electric scissors are used to cut thin stems and/or branches, the movable blade is open too wide for the thin stems and/or branches. In order to bring the movable blade from the closed state back to the too widely open state, the electric motor wastes energy and requires a long time to allow the movable blade to pivot to the widely open state. In addition, the pivot angle of the movable blade requires a long stroke to bring the control lever from the opening position to the closing position. Thus, the operator may get tired easily from continuously cutting a lot of thin stems and/or branches. The present invention provides electric scissors that do not open a pair of blades too wide in cutting a lot of thin stems and/or branches continuously.

### Solution to Problem

In order to solve the problem described above, the present invention provides electric scissors including: an electric motor in a casing; a power transmission mechanism converting, in the casing, rotation of the electric motor to linear reciprocation of a driven member between a first position and a second position; a pair of blades disposed at a front of the casing to open and close in accordance with the reciprocation of the driven member between the first and second positions, at least one of the blades being supported pivotably in an open state when the driven member is in the first position and in a closed state when the driven member is in the second position; a control lever disposed in the casing to be movable between an opening position and a closing position, the control lever moving from the opening position to the closing position to move the driven member from the first position to the second position, thereby bringing the blades from the open state to the closed state; and a detector detecting movement of the control lever to the closing position. The electric scissors drive the electric motor to bring the driven member to the first position, thereby bringing the blades to the open state, when manipulation force of moving the control lever to the closing position is not applied to the control lever, and to the second position upon detection by the detector, thereby bringing the blades to the closed state, when the manipulation force of moving the control lever to the closing position is applied to the control lever. One of the control lever and the casing includes a stopper supported to advance to and retreat from the other of the control lever and the casing. The other includes a locker locking the stopper, which has advanced to the other, to restrict movement of the control lever toward the opening position, when the control lever is in an intermediate opening position between the opening and closing positions. When the stopper retreats from the other to a retreat position where the stopper is not locked by the locker, the control lever is movable between the opening and closing positions. When the stopper advances to the other to a lock position where the stopper is lockable by the locker, movement of the control lever is limited to an area between the intermediate opening position and the closing position.

In the electric scissors with the structure described above, when the stopper provided for one of the control lever and the casing retreats to the retreat position where the stopper is not locked by the locker provided for the other of the control lever and the casing, the control lever is movable between the opening and closing positions. Moving the control lever from the opening position to the closing position allows the electric scissors to cut thick stems and/or branches that can be sandwiched between the blades in the open state. On the other hand, when the stopper provided for the one of the control lever and the casing is in the lock position where the stopper is lockable by the locker provided for the other of the control lever and the casing, the control lever is not movable from the intermediate opening position to the opening position but is movable only between the intermediate opening position and the closing position. Thus, moving the control lever from the intermediate opening position to the closing position, that is, within a shorter stroke than that from the opening position to the closing position allows the electric scissors to cut thick stems and/or branches that can be sandwiched between the blades in an intermediate open state that is narrower than the open state. In this manner, in cutting thin stems and/or branches, the control lever moves from the closing position, stops in the intermediate opening position without returning to the opening position. This significantly reduces wastes of the energy of the electric motor needed to bring the blades from the intermediate open state to the open state, and the time until the blades move from the intermediate open state back to the open state. In addition, thin stems and/or branches are cut simply by moving the control lever from the intermediate opening position to the closing position, that is, within a shorter stroke than that from the opening position to the closing position. This improves the efficiency in cutting the thin stems and/or branches.

In the electric scissors with the structure described above, the stopper is preferably pivotably supported by the control lever to advance to and retreat from the casing. In this case, the stopper is located near the control lever. This allows the operator to pivotably operate the stopper by stretching his/her hand and fingers that grasp the control lever. That is, the operability of the stopper improves.

In the electric scissors with the structure described above, the casing preferably includes a plurality of lockers such that the control lever has a plurality of intermediate opening positions. By changing the pivot angle of the stopper, the stopper is preferably selectively locked in one of the lockers to selectively bring the control lever to corresponding one of the intermediate opening positions. In this case, the pivot angle of the stopper is changed to selectively lock the stopper in one of the lockers, and the position of the control lever is selected from the intermediate opening positions. This allows the operator to select one of the intermediate open states of the blades according to the thicknesses of stems and/or branches to be cut. The operator opens the blades with an opening width most suitable for the thicknesses of the stems and/or branches to be cut.

### Brief Description of Drawings

Fig. 1 is a perspective view of electric scissors according to the present invention.
Figs. 2(a)-2(c) are longitudinal sectional views of Fig. 1 taken along the length of the scissors. Fig. 2(a) illustrates that a pair of blades is open. Fig. 2(b) illustrates that the pair of blades is closed. Fig. 2(c) illustrates that the pair of blades is in an intermediate open state.
Figs. 3(a) and 3(b) are exploded perspective views of the casing of Fig. 1 with its right half removed. Fig. 3(a) illustrates that a stopper is in a retreat position. Fig. 3(b) illustrates that the stopper is in a lock position.
Figs. 4(a)-4(c) are partial enlarged cross-sectional views illustrating a control lever and a mechanism for detecting manipulation of Fig. 2. Fig. 4(a) illustrates that the control lever is in an opening position. Fig. 4(b) illustrates that the control lever is pulled to the closing position when manipulation force is applied onto the control lever. Fig. 4 (c) illustrates that no manipulation force is applied onto the control lever that has been pulled to the closing position.
Fig. 5 is a longitudinal sectional view taken along the length of the scissors that include a lock to maintain the control lever in the closed state in the casing.

### Description of Embodiment

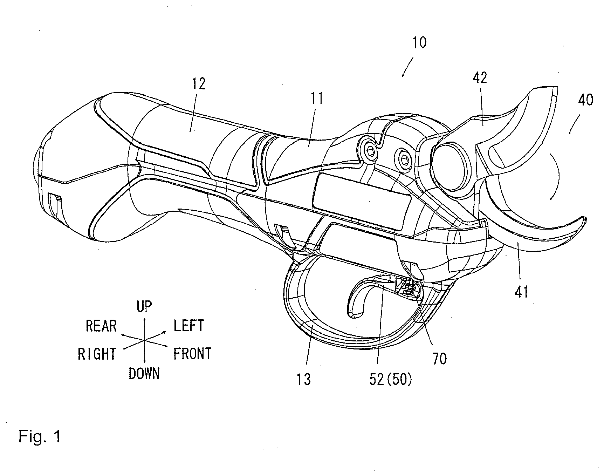

An embodiment of electric scissors according to the present invention will now be described with reference to the drawings. A pair of electric scissors 10 is used mainly to cut or prune the stems and/or branches of plants such as grasses, flowers, and trees in agriculture and gardening, for example. As shown in Figs. 1-2(c), the electric scissors 10 include a cylindrical casing 11 extending in the longitudinal direction. The rear half of the casing 11 is a grip 12 to be held by the operator. The casing 11 includes an electric motor 20 at the rear, and a power transmission mechanism 30 at the front. The pow er transmission mechanism 30 co nverts rotation of the electric motor 20 to linear reciprocation of a nut casing (driven member) 33 between a first position and a second position. A pair of blades 40 is disposed at the front of the casing 11. A control lever 50 is disposed at a lower front of the casing 11 and opens and closes the blades 40. A ring guard 13 is disposed at the lower front of the casing 11 to surround a lower portion of the control lever 50.

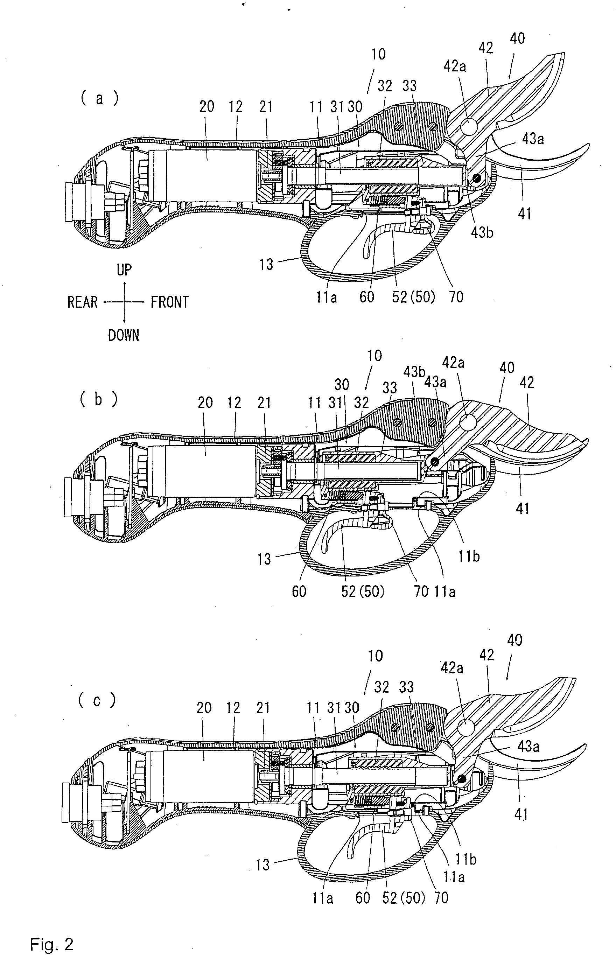

As shown in Figs. 2(a)-2(c), this embodiment employs a ball screw mechanism as the power transmission mechanism 30, which includes an external thread 31, a nut 32, and the nut casing (driven member) 33. The external thread 31 is fixed to an output shaft (rotating shaft) 21 of the electric motor 20 by a shaft coupling. The nut 32 is screwed on the external thread 31 via balls. The nut casing 33 houses the nut 32. The external thread 31 extends in the casing 11 in the longitudinal direction, and rotates clockwise or counterclockwise when driven by the electric motor 20. The rotation of the external thread 31 allows the nut 32 to helically move back and forth between the first position (advance position) and the second position (retreat position). The nut casing 33 is disposed outside the nut 32. The rotation of the external thread 31 allows the nut casing 33 to reciprocate together with the nut 32 between the first and second positions. Alternatively, the nut casing 33 may be integral with the nut 32, which may be used as a driven member. While, in this embodiment, an example has been described where the power transmission mechanism 30 is a ball screw mechanism, the mechanism is not limited thereto, and may be a feed screw mechanism or a rack and pinion mechanism, for example.

As shown in Figs. 1-2(c), the blades 40 are disposed at the front of the casing 11. The blades 40 are comprised of a stationary blade 41 and a movable blade 42. The stationary blade 41 is fixed at the front of the casing 11 to protrude forward. The movable blade 42 is supported at the front of the casing 11 and pivotable about a fulcrum 42a above the stationary blade 41. The movable blade 42 is pivotable between an open state (full-open state) shown in Fig. 2(a) and a closed state shown in Fig. 2(b). In the open state, the movable blade 42 protrudes obliquely forward above the stationary blade 41 to keep a distance from the stationary blade 41 such that the pair of blades forms a substantial V-shape. In the closed state, the movable blade 42 pivots about the fulcrum 42a such that the front of the movable blade 42 faces down, and that the lower portion of the movable blade 42 overlaps with the upper portion of the stationary blade 41.

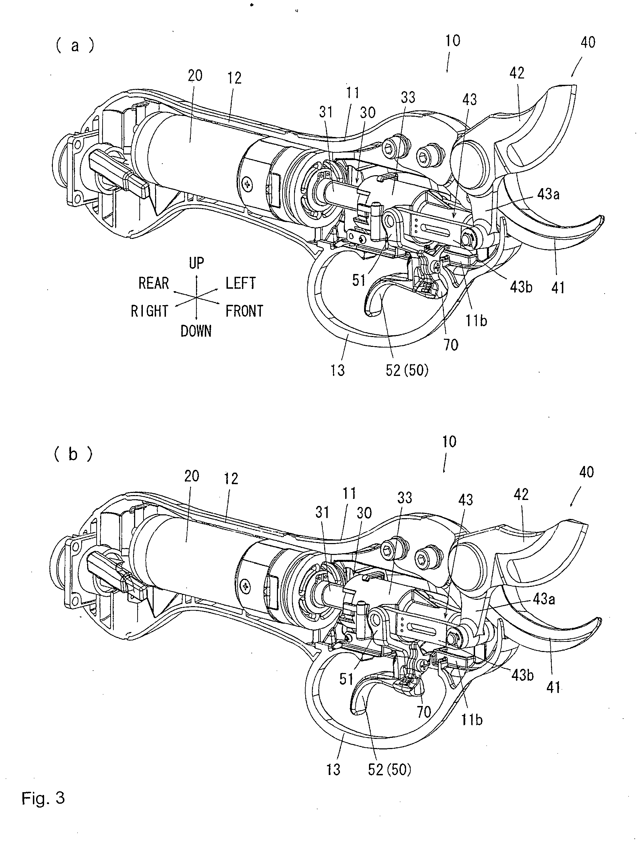

As shown in Figs. 3(a) and 3(b), the movable blade 42 is connected to the nut casing 33 via a link mechanism 43. The link mechanism 43 converts the reciprocation of the nut casing 33 in the longitudinal direction to the pivot movement of the movable blade 42. The link mechanism 43 includes a lever 43a and a link 43b. The lever 43a is integral with the rear of the movable blade 42. The link 43b couples the tip of the lever 43a to the nut casing 33 and extends in the longitudinal direction. As shown in Figs. 2(a) and 3(a), when the nut casing 33 is in the first position, the link 43b pushes the lower portion of the lever 43a forward, thereby bringing the movable blade 42 to the open state described above. On the other hand, as shown in Fig. 2(b), when the nut casing 33 is in the second position, the link 43b pulls the lower portion of the lever 43a backward, thereby bringing the movable blade 42 to the closed state described above.

As shown in Figs. 2(a)-2(c), the control lever 50 is disposed at the lower front of the casing 11. The control lever 50 is movable back and forth between the front opening position shown in Fig. 2(a) and the rear closing position shown in Fig. 2(b). As shown in Figs. 3(a) and 3(b), the control lever 50 includes a pair of right and left arms 51 and a trigger 52. The right and left arms 51 are supported on the right and left of the nut casing 33, respectively, to be swingable around the horizontal axis extending in the width direction. The trigger 52 is pulled by an operator with his/her hand and fingers, and protrudes downward from a slit 11a. The slit 11a is cut at the front of the lower surface of the casing 11, and extends in the longitudinal direction. The operator pulls the trigger 52 of the control lever 50 from the front opening position to the rear closing position with his/her hand and fingers. Then, the electric motor 20 drives the external thread 31 to rotate clockwise. The nut 32 and the nut casing 33 move from the first position to the second position. The link mechanism 43 converts the movement of the nut casing 33 from the first position to the second position to the pivot movement of the movable blade 42. The movable blade 42 pivots from the open state to the closed state.

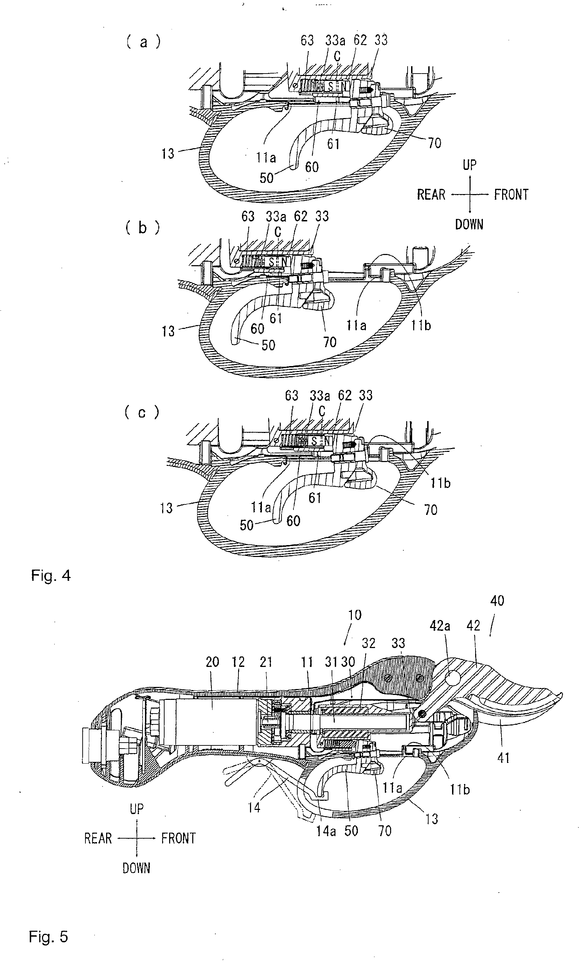

As shown in Figs. 4(a)-4(c), a detection mechanism 60 is disposed at the lower front of the casing 11 and detects manipulation of the control lever 50. The detection mechanism 60 includes a detector 61 and a sensing medium 62. The detector 61 detects the movement of the control lever 50 to the closing position. The sensing medium 62 allows for detecting the movement of the control lever 50 to the closing position. The detector 61 is a magnetic sensor that detects the movement of the control lever 50 to the closing position utilizing the Hall effect generated by the magnetic field of the magnet used as the sensing medium 62.

An elongated columnar detection cavity 33a is formed in a lower portion of the nut casing 33, and extends in the longitudinal direction from right behind the control lever 50. The detector 61 is attached to the bottom of the nut casing 33 under the detection cavity 33a. The sensing medium 62 is housed in the detection cavity 33a and movable in the axis direction. The sensing medium 62 is biased to the control lever 50 by a coil spring (biasing member) 63. The front side of the sensing medium 62 with respect to the center C in the longitudinal direction is the N pole of the magnet, and the rear side is the S pole of the magnet.

As shown in Fig. 4(a), when the control lever 50 is in the opening position, the control lever 50 abuts on the front of the slit 11a of the casing 11, which extends in the longitudinal direction, via a stopper 70. The stopper 70 will be described later. This restricts the forward movement of the control lever 50. In this state, the sensing medium 62 is biased to the control lever 50 by the coil spring 63. Since the control lever 50 does not move forward, the biasing force of the coil spring 63 moves the sensing medium 62 little toward the control lever 50 to the position in which the longitudinal center C faces the detector 61. The detector 61 detects that it faces the center C of the sensing medium 62. Upon the detection, a controller (not shown) instructs not to drive the electric motor 20.

As shown in Fig. 4(b), when manipulation force is applied to the control lever 50 in the opening position, the control lever 50 is pulled backward to the closing position. Then, the control lever 50 pushes the sensing medium 62 backward against the biasing force of the coil spring 63 to the position in which the N pole at the front faces the detector 61. While the detector 61 detects that it faces the N pole at the front of the sensing medium 62, the controller drives the electric motor 20 clockwise. When the external thread 31 rotates clockwise, the nut 32 and the nut casing 33 move from the first position to the second position, and the link mechanism 43 converts the movement of the nut casing 33 from the first position to the second position to the pivot movement of the movable blade 42. Then, the movable blade 42 pivots from the open state to the closed state. When the nut casing 33 moves to the second position, the control lever 50 moves together with the nut casing 33 to the closing position.

As shown in Fig. 4(c), when the manipulation force applied by the operator with his/her hand and fingers is removed from the control lever 50 in the closing position (i.e., that has been pulled to the closing position), the biasing force of the coil spring 63 pushes the sensing medium 62 forward toward the control lever 50 to the position in which the S pole at the rear faces the detector 61. While the detector 61 detects that it faces the S pole at the rear of the sensing medium 62, the controller drives the electric motor 20 counterclockwise. When the external thread 31 rotates counterclockwise, the nut 32 and the nut casing 33 move from the second position (or a position closer to the second position) to the first position (or a position closer to the first position). The link mechanism 43 converts the movement of the nut casing 33 from the second position (or the position closer to the second position) to the first position (or the position closer to the first position) to the pivot movement of the movable blade 42. Then, the movable blade 42 pivots from the closed state to the open state. When the nut casing 33 moves to the first position, the control lever 50 moves together with the nut casing 33 to the opening position. In returning to the opening position, the control lever 50 abuts on the front of the slit 11a of the casing 11 via the stopper 70. This restricts the forward movement of the control lever 50. In this state, as shown in Fig. 4(a), since the control lever 50 does not move forward, the biasing force of the coil spring 63 moves the sensing medium 62 little toward the control lever 50 to the position in which the longitudinal center C faces the detector 61. The detector 61 detects that it faces of the center C of the sensing medium 62. Upon the detection, the controller instructs to stop the electric motor 20.

As shown in Figs. 2(a)-3(b), the stopper 70 is disposed in front of the control lever 50. The stopper 70 restricts the movement of the control lever 50 to a position that is closer to the opening position than the intermediate opening position between the opening and closing positions. The stopper 70 limits the pivot angle of the movable blade 42 of the blades 40, thereby limiting the opening width of the blades 40. As shown in Figs. 3(a) and 3(b), the stopper 70 is supported at the front of the control lever 50 to be pivotable around the axis in the longitudinal direction. Lockers 11b are disposed at the front of the casing 11. The lockers 11b are lockable with an upper portion of the stopper 70 when the control lever 50 is in the intermediate opening position. In Figs. 3(a) and 3(b), although only the locker 11b on the left half of the casing 11 is shown, another locker 11b is also disposed in the same way on the right half of the casing 11. The stopper 70 is pivotable between a retreat position shown in Fig. 3(a) and a lock position shown in Fig. 3(b). In the retreat position, the stopper 70 is not locked by the lockers 11b. In the lock position, the stopper 70 is locked by the lockers 11b. When the control lever 50 is in the intermediate opening position or in a position that is closer to the closing position than the intermediate opening position, the stopper 70 pivots from the retreat position to the advance position on the right or left. Then, the top of the stopper 70 is locked or lockable by the lockers 11b of the casing 11 to restrict the movement of the control lever 50 from the intermediate opening position to the opening position. While the embodiment has been described where the stopper 70 is pivotably provided for the control lever 50 to advance to and retreat from the control lever 50, the present invention is not limited thereto. The stopper 70 may be provided for the control lever 50 to be movable up and down or right and left. The stopper 70 may move upward, or to the right, or to the left to be locked or lockable by the lockers 11b.

The operation of the electric scissors 10 with the above-mentioned structure will be described. As described above, when the operator does not pull the control lever 50, that is, does not apply any manipulation force, the movable blade 42 is in the open state as shown in Fig. 2(a). When no thin stems or branches are cut, the stopper 70 is in the retreat position as shown in Fig. 3(a). The operator grasps the grip 12 of the casing 11 and sandwiches the stems and/or branches of plants, for example, between the stationary blade 41 and the movable blade 42. The operator applies manipulation force to the control lever 50 with his/her index finger of the hand grasping the grip 12 and pulls the control lever 50 backward. When the control lever 50 shown in Fig. 2(a) is pulled backward from the opening position to the closing position, the control lever 50 pushes the sensing medium 62 of the detection mechanism 60 backward against the biasing force of the coil spring 63 to the position in which the N pole at the front faces the detector 61 as shown in Fig. 4(b). When the controller drives the electric motor 20 clockwise upon detection by the detector 61, the external thread 31 rotates clockwise to move the nut 32 and the nut casing 33 from the first position to the second position as shown in Fig. 2(b). The link mechanism 43 converts the movement of the nut casing 33 from the first position to the second position to the pivot movement of the movable blade 42. The movable blade 42 pivots from the open state to the closed state to cut the stems and/or branches of the plants between the stationary blade 41 and the movable blade 42.

When the manipulation force is removed from the control lever 50, which has been pulled to the closing position shown in Fig. 2(b), the biasing force of the coil spring 63 pushes the sensing medium 62 of the detection mechanism 60 forward toward the control lever 50 to the position in which the S pole at the rear faces the detector 61 as shown in Fig. 4(c). When the controller drives the electric motor 20 counterclockwise upon detection by the detector 61, the external thread 31 rotates counterclockwise to move the nut 32 and the nut casing 33 from the second position to the first position. The link mechanism 43 converts the movement of the nut casing 33 from the second position to the first position to the pivot movement of the movable blade 42. Then, the movable blade 42 pivots from the closed state to the open state.

As shown in Fig. 2(a), when the nut 32 and the nut casing 33 move to the first position, the control lever 50 is in the opening position and abuts on the front of the slit 11a of the casing 11 via the stopper 70. This restricts the forward movement of the control lever 50. As shown in Fig. 4(a), the coil spring 63 allows the sensing medium 62 to abut on the control lever 50 whose movement is restricted, and to move little toward the control lever 50 to the position in which the longitudinal center C faces the detector 61. The detector 61 detects that it faces the center C of the sensing medium 62. Upon the detection, the controller stops the electric motor 20 so that the movable blade 42 stops in the open state.

In cutting thin stems and/or branches, while the control lever 50 is pulled to a position that is closer to the closing position than the intermediate opening position, the stopper 70 pivots from the retreat position to the lock position as shown in Fig. 3(b). This restricts, as shown in Fig. 2(c), the movement of the control lever 50 from the intermediate opening position to the opening position. The operator grasps the grip 12 of the casing 11 and sandwiches the thin stems and/or branches of plants between the stationary blade 41 and the movable blade 42 in the intermediate open state. The operator pulls the control lever 50 with his/her index finger of the hand grasping the grip 12. When the control lever 50 shown in Fig. 2(C) is pulled backward from the intermediate opening position to the closing position, the control lever 50 pushes the sensing medium 62 of the detection mechanism 60 backward against the biasing force of the coil spring 63 to the position in which the N pole at the front faces the detector 61 as shown in Fig. 4(b). When the controller drives the electric motor 20 clockwise upon detection by the detector 61, the external thread 31 rotates clockwise to move the nut 32 and the nut casing 33 from an intermediate position closer to the second position than the first position to the second position as shown in Fig. 2(b). The link mechanism 43 converts the movement of the nut casing 33 from the intermediate position to the second position to the pivot movement of the movable blade 42. Then, the movable blade 42 pivots from the intermediate open state to the closed state to cut the thin stems and/or branches of the plants between the stationary blade 41 and the movable blade 42.

When the manipulation force is removed from the control lever 50, which has been pulled to the closing position shown in Fig. 2(b), the biasing force of the coil spring 63 pushes the sensing medium 62 of the detection mechanism 60 forward toward the control lever 50 to the position in which the S pole at the rear faces the detector 61 as shown in Fig. 4(c). When the controller drives the electric motor 20 counterclockwise upon detection by the detector 61, the external thread 31 rotates counterclockwise to move the nut 32 and the nut casing 33 from the second position to the intermediate position. The link mechanism 43 converts the movement of the nut casing 33 from the second position to the intermediate position to the pivot movement of the movable blade 42. Then, the movable blade 42 pivots from the closed state to the intermediate open state.

As shown in Fig. 2(c), when the nut 32 and the nut casing 33 move to the intermediate position, the control lever 50 is in the intermediate opening position, and the top of the stopper 70 abuts on the lockers 11b in the casing 11. This restricts the forward movement of the control lever 50. The coil spring 63 allows the sensing medium 62 to abut on the control lever 50 whose movement is restricted, and to move little toward the control lever 50 to the position in which the longitudinal center C faces the detector 61. The detector 61 detects that it faces the center C of the sensing medium 62. Upon the detection, the controller stops the electric motor 20 so that the movable blade 42 stops the intermediate open state.

In the electric scissors 10 according to the above-described embodiment, the control lever 50 includes the stopper 70, while the casing 11 includes the lockers 11b. The stopper 70 is supported to advance to and retreat from the casing 11. When the control lever 50 is in the intermediate opening position between the opening and closing positions, the lockers 11b lock the stopper 70, which has advanced to the casing 11, to restrict the movement of the control lever 50 toward the opening position. When the stopper 70 retreats from the casing 11 to the retreat position where the stopper is not locked by the lockers 11b, the control lever 50 is movable between the opening and closing positions. When the stopper 70 advances to the casing 11 to the lock position where the stopper is lockable by the lockers 11b, the movement of the control lever 50 is limited to the area between the intermediate opening position and the closing position.

When the stopper 70 provided for the control lever 50 retreats to the retreat position where the stopper is not locked by the lockers 11b provided for the casing 11, the control lever 50 is movable between the opening and closing positions. Moving the control lever 50 from the opening position to the closing position allows the electric scissors to cut thick branches and stems that can be sandwiched between the blades 40 in the open state.

On the other hand, when the stopper 70 provided for the control lever 50 pivots to the lock position where the stopper 70 is lockable by the lockers 11b provided for the casing 11, the movement of the control lever 50 from the intermediate opening position to the opening position is restricted. Then, the movement of the control lever 50 is limited to the area between the intermediate opening position and the closing position. This allows the control lever 50 to move from the intermediate opening position to the closing position, that is, within a shorter stroke than that from the opening position to the closing position. As a result, the electric scissors cut thin stems and/or branches that can be sandwiched between the blades 40 in the intermediate open state that is narrower than the open state. In this manner, in cutting thin stems and/or branches, the control lever 50 moves from the closing position, stops in the intermediate opening position without returning to the opening position. This significantly reduces wastes of the energy of the electric motor 20 needed to bring the blades 40 from the intermediate open state to the open state, and the time until the blades 40 move from the intermediate open state back to the open state. In addition, thin stems and/or branches are cut simply by moving the control lever 50 from the intermediate opening position to the closing position, that is, within a shorter stroke than that from the opening position to the closing position. This improves the efficiency in cutting the thin stems and/or branches.

The stopper 70 is pivotably supported at the front of the control lever 50 to advance to and retreat from the casing 11. In this manner, the stopper 70 is located near the control lever 50. This allows the operator to pivotably operate the stopper 70 by stretching his/her hand and fingers that grasp the control lever 50, while grasping the grip 12 of the casing 11. That is, the operability of the stopper 70 improves.

Alternatively, the casing 11 may include a plurality of lockers 11b to allow the control lever 50 movable among a plurality of intermediate opening positions. Specifically, the locker 11b on the right half of the casing 11 may be closer to the closing position (or the opening position) than the locker 11b on the left half, and the intermediate opening position when the stopper 70 pivots to the right is closer to the closing position (or the opening position) than the intermediate opening position when the stopper 70 pivots to the left. In this case, by changing the pivot angle of the stopper 70 so that the right or left locker selectively locks the stopper 70, the operator can select one of the two intermediate opening positions of the control lever 50. That is, the operator can select one of the intermediate open states of the blades 40 according to the thicknesses of stems and/or branches to be cut. The operator can open the blades 40 with an opening width most suitable for the thicknesses of the stems and/or branches to be cut. Alternatively, the control lever 50 may have a plurality of intermediate opening positions by attaching the lockers 11b to the casing 11 to be adjustable in the longitudinal direction. In this case, the slit may be cut in the casing 11 to extend in the longitudinal direction, and the positions of the lockers 11b may be adjusted stepwise or steplessly in the longitudinal direction by a screw, which is inserted into the casing 11 from the outside. While an example has been described where two intermediate opening positions are provided, the number is not limited thereto. By changing the pivot angle of the stopper 70, the control lever 50 may have first, second, ... , n-th intermediate opening positions to stepwise adjust the intermediate open state of the blades 40.

While, in the above-described embodiment, the stopper 70 is disposed in the control lever 50 to advance and retreat (e.g., pivot) and the lockers 11b are disposed in the casing 11, the present invention is not limited thereto. The stopper 70 may be disposed in the casing 11 to advance and retreat (e.g., pivot or move), and the stopper 70 may include a locker. This case also provides effects and advantages similar to those described above.

In the above-described embodiment, while the blades 40 are comprised of the stationary blade 41 and the movable blade 42 that is pivotable above the stationary blade 41, the present invention is not limited thereto. In place of the movable blade pivotable up and down about the stationary blade 41, the blades 40 may be comprised of a pair of movable blades. This case also provides effects and advantages similar to those described above.

In the above-described embodiment, while the control lever 50 is supported by the nut casing 33 and slides, together with the nut casing 33, between the opening and closing positions in the longitudinal direction, the structure is not limited thereto. The control lever 50 may be supported by the casing 11 to be pivotable about the horizontal axis in the width direction, and may pivot between the opening and closing positions.

In the above-described embodiment, as shown in Fig. 5, a locking member 14 may be pivotably disposed on the rear bottom of the casing 11 to fix the control lever 50 to the closing position. In order to release the control lever 50 from the locking member 14, the operator needs to grasp the rear of locking member 14 with the hand grasping the grip 12. Then, as indicated by the two dot chain line in Fig. 5, a locker 14a at the front end is released from the lower end of the control lever 50. In this manner, the locking member 14 holds the blades 40 in the closed state when the electric scissors 10 are stored.

### [REFERENCE CHARACTERS]

- 10: Electric Scissors
- 11: Casing
- 11b: Locker
- 20: Electric Motor
- 30: Power Transmission Mechanism
- 33: Driven Member (Nut Casing)
- 40: Pair of Blades
- 50: Control Lever
- 61: Detector
- 70: Stopper

## Claims

1. Electric scissors (10) comprising:
an electric motor (20) in a casing (11), the electric motor (20) comprising a rotating shaft (21);
a controller for controlling the electric motor (20);
a power transmission mechanism (30) including a driven member (33), the power transmission mechanism (30) coupled to the rotating shaft (21) of the electric motor (20) and converting, in the casing (11), rotation of the rotation shaft (21) of the electric motor (20) to linear reciprocation of the driven member (33) between a first position and a second position;
a pair of blades (40) disposed at a front of the casing (11) to open and close in accordance with the reciprocation of the driven member (33) between the first and second positions, at least one (42) of the blades (40) being connected to the driven member (33) and supported pivotably in an open state when the driven member (33) is in the first position and in a closed state when the driven member (33) is in the second position;
a control lever (50) disposed in the casing (11) to be movable between an opening position and a closing position by an operator, the control lever (50) moving from the opening position to the closing position to move the driven member (33) from the first position to the second position, thereby bringing the blades (40) from the open state to the closed state; and
a detector (60) connected to the controller and detecting movement of the control lever (50) to the closing position,
**characterized in that**
the controller is configured to drive the electric motor (20) to bring the driven member (33)
to the first position, thereby bringing the blades (40) to the open state, when manipulation force of moving the control lever (50) to the closing position is not applied to the control lever (50), and
to the second position upon detection by the detector (60), thereby bringing the blades (40) to the closed state, when the manipulation force of moving the control lever (50) to the closing position is applied to the control lever (50),
one of the control lever (50) and the casing (11) includes a stopper (70) supported to advance to and retreat from the other of the control lever (50) and the casing (11),
the other includes a locker (11b) locking the stopper (70), which has advanced to the other, to restrict movement of the control lever (50) toward the opening position, when the control lever (50) is in an intermediate opening position between the opening and closing positions,
when the stopper (70) retreats from the other to a retreat position where the stopper (70) is not locked by the locker (11b), the control lever (50) is movable between the opening and closing positions,
when the stopper (70) advances to the other to a lock position where the stopper (70) is lockable by the locker, movement of the control lever (50) is limited to an area between the intermediate opening position and the closing position.

2. The electric scissors (10) of claim 1, **characterized by**
the electric scissors (10) being configured such that when the driven member (33) moves to the second position, the control lever (50) moves together with the driven member (33) to the closing position, and when the driven member (33) moves to the first position, the control lever (50) moves together with the driven member (33) to the opening position,
wherein the movement of the control lever (50) toward the opening position is restricted by a top of the stopper (70) abutting on the locker (11b) in the direction of linear reciprocation when the control lever (50) is in the intermediate opening position.

3. The electric scissors (10) of claim 1 or 2, **characterized in that**
the stopper (70) is pivotably supported by the control lever (50) to advance to and retreat from the casing (11).

4. The electric scissors (10) of any one of claims 1 to 3, **characterized in that**
the casing (1) includes a plurality of lockers (11b) such that the control lever (50) has a plurality of intermediate opening positions, and
a pivot angle of the stopper (70) is changed to selectively lock the stopper (70) in one of the lockers (11b), thereby selectively bringing the control lever (50) to corresponding one of the intermediate opening positions.

## Patentansprüche

1. Eine elektrische Schere (10), die Folgendes umfasst:
einen Elektromotor (20) in einem Gehäuse (11), wobei der Elektromotor (20) eine rotierende Welle (21) umfasst;
eine Steuerung zum Steuern des Elektromotors (20);
einen Kraftübertragungsmechanismus (30), der ein angetriebenes Element (33) beinhaltet, wobei der Kraftübertragungsmechanismus (30) mit der rotierenden Welle (21) des Elektromotors (20) gekoppelt ist und im Gehäuse (11) die Drehung der rotierenden Welle (21) des Elektromotors (20) in eine lineare Hin- und Herbewegung des angetriebenen Elements (33) zwischen einer ersten Position und einer zweiten Position umwandelt;
ein Klingenpaar (40), das an einer Vorderseite des Gehäuses (11) angeordnet ist, um sich gemäß der Hin- und Herbewegung des angetriebenen Elements (33) zwischen der ersten und der zweiten Position zu öffnen und zu schließen, wobei mindestens eine (42) der Klingen (40) mit dem angetriebenen Element (33) verbunden und schwenkbar gelagert ist in einem offenen Zustand, wenn sich das angetriebene Element (33) in der ersten Position befindet, und in einem geschlossenen Zustand, wenn sich das angetriebene Element (33) in der zweiten Position befindet;
einen Steuerhebel (50), der im Gehäuse (11) angeordnet ist, um durch eine Bedienperson zwischen einer Öffnungs- und einer Schließposition bewegt werden zu können, wobei sich der Steuerhebel (50) von der Öffnungs- in die Schließposition bewegt, um das angetriebene Element (33) von der ersten Position in die zweite Position zu bewegen, wodurch die Klingen (40) aus dem geöffneten Zustand in den geschlossenen Zustand gebracht werden; und
einen Detektor (60), der mit der Steuerung verbunden ist und die Bewegung des Steuerhebels (50) in die Schließposition erfasst,
**dadurch gekennzeichnet, dass**
die Steuerung konfiguriert ist, um den Elektromotor (20) anzusteuern, um das angetriebene Element (33)
in die erste Position zu bringen, wodurch die Klingen (40) in den geöffneten Zustand gebracht werden, wenn die Betätigungskraft des Bewegens des Steuerhebels (50) in die Schließposition auf den Steuerhebel (50) nicht angewendet wird, und
in die zweite Position zu bringen, nach Erfassung durch den Detektor (60), wodurch die Klingen (40) in den geschlossenen Zustand gebracht werden, wenn die Betätigungskraft des Bewegens des Steuerhebels (50) in die Schließposition auf den Steuerhebel (50) aufgebracht wird,
**dass** der Eine der Folgenden: der Steuerhebel (50) und das Gehäuse (11) einen Stopper (70) beinhaltet, der abgestützt ist, um zum Anderen der Folgenden: des Steuerhebels (50) und des Gehäuses (11) vorzurücken und sich von diesem zurückzuziehen,
**dass** der Andere ein Verriegelungselement (*locker*) (11b) beinhaltet, das den zum Anderen vorgerückten Stopper (70) verriegelt, um die Bewegung des Steuerhebels (50) in Richtung der Öffnungsposition zu beschränken, wenn sich der Steuerhebel (50) in einer zwischenliegenden Öffnungsposition zwischen der Öffnungs- und der Schließposition befindet,
**dass,** wenn sich der Stopper (70) von dem Anderen in eine Rückzugsposition zurückzieht, wo der Stopper (70) nicht durch das Verriegelungselement (11b) verriegelt ist, der Steuerhebel (50) zwischen der Öffnungs- und der Schließposition beweglich ist,
dass, wenn der Stopper (70) zum Anderen in eine Verriegelungsposition vorrückt, wo der Stopper (70) durch das Verriegelungselement verriegelbar ist, die Bewegung des Steuerhebels (50) auf einen Bereich zwischen der mittleren Öffnungsposition und der Schließposition begrenzt ist.

2. Die elektrische Schere (10) nach Anspruch 1, **durch Folgendes gekennzeichnet:**
die elektrische Schere (10), die so konfiguriert ist, dass, wenn sich das angetriebene Element (33) in die zweite Position bewegt, sich der Steuerhebel (50) zusammen mit dem angetriebenen Element (33) in die Schließposition bewegt, und dass, wenn sich das angetriebene Element (33) in die erste Position bewegt, sich der Steuerhebel (50) zusammen mit dem angetriebenen Element (33) in die Öffnungsposition bewegt,
wobei die Bewegung des Steuerhebels (50) in Richtung der Öffnungsposition durch eine Oberseite des Stoppers (70) beschränkt wird, die in Richtung der linearen Hin- und Herbewegung am Verriegelungselement (11b) anliegt, wenn sich der Steuerhebel (50) in der mittleren Offnungsposition befindet.

3. Die elektrische Schere (10) nach Anspruch 1 oder 2, **dadurch gekennzeichnet, dass**
der Stopper (70) durch den Steuerhebel (50) schwenkbar gelagert ist, um zum Gehäuse (11) vorzurücken und sich von diesem zurückzuziehen.

4. Die elektrische Schere (10) nach irgendeinem der Ansprüche von 1 bis 3, **dadurch gekennzeichnet, dass**
das Gehäuse (1) eine Vielzahl von Verriegelungselementen (11b) beinhaltet, sodass der Steuerhebel (50) eine Vielzahl von zwischenliegenden Öffnungspositionen aufweist, und
**dass** ein Schwenkwinkel des Stoppers (70) geändert wird, um den Stopper (70) selektiv in einem der Verriegelungselemente (11b) zu verriegeln, wodurch der Steuerhebel (50) selektiv in eine der entsprechenden zwischenliegenden Öffnungspositionen gebracht wird.

## Revendications

1. Des ciseaux électriques (10) comprenant :
un moteur électrique (20) dans un boîtier (11), le moteur électrique (20) comprenant un arbre rotatif (21) ;
un dispositif de commande pour commander le moteur électrique (20) ;
un mécanisme de transmission de puissance (30) incluant un élément entraîné (33), le mécanisme de transmission de puissance (30) étant couplé à l'arbre rotatif (21) du moteur électrique (20) et convertissant, dans le boîtier (11), la rotation de l'arbre de rotation (21) du moteur électrique (20) en mouvement de va-et-vient linéaire de l'élément entraîné (33) entre une première position et une deuxième position ;
une paire de lames (40) disposées à l'avant du boîtier (11) pour s'ouvrir et se fermer selon le mouvement de va-et-vient de l'élément entraîné (33) entre les positions première et deuxième, sachant qu'au moins une (42) des lames (40) est reliée à l'élément entraîné (33) et supportée de manière pivotante dans un état ouvert lorsque l'élément entraîné (33) se trouve dans la première position, et dans un état fermé lorsque l'élément entraîné (33) se trouve dans la deuxième position ;
un levier de commande (50) agencé dans le boîtier (11) pour être déplaçable par un opérateur entre une position d'ouverture et une position de fermeture, le levier de commande (50) se déplaçant de la position d'ouverture à la position de fermeture afin de déplacer l'élément entraîné (33) depuis la première position à la deuxième position, amenant ainsi les lames (40) de l'état ouvert à l'état fermé ; et
un détecteur (60) relié au dispositif de commande et détectant le mouvement du levier de commande (50) vers la position de fermeture,
**caractérisé en ce que**
le dispositif de commande est configuré pour actionner le moteur électrique (20) afin d'amener l'élément entraîné (33)
à la première position, amenant ainsi les lames (40) à l'état ouvert, lorsque la force de manipulation du déplacement du levier de commande (50) à la position de fermeture n'est pas appliquée au levier de commande (50), et
à la deuxième position en cas de détection par le détecteur (60), amenant ainsi les lames (40) à l'état fermé, lorsque la force de manipulation du déplacement du levier de commande (50) en position de fermeture est appliquée au levier de commande (50),
que l'un parmi le levier de commande (50) et le boîtier (11) comprend un arrêt (70) supporté pour avancer vers et reculer depuis l'autre parmi le levier de commande (50) et le boîtier (11),
que l'autre comprend un verrou (11b) verrouillant la butée (70), qui s'est avancée vers l'autre, pour limiter le mouvement du levier de commande (50) vers la position d'ouverture, lorsque le levier de commande (50) se trouve dans une position d'ouverture intermédiaire entre les positions d'ouverture et de fermeture,
que lorsque la butée (70) se retire de l'autre vers une position de retrait où la butée (70) n'est pas verrouillée par le verrou (11b), le levier de commande (50) est mobile entre les positions d'ouverture et de fermeture,
que lorsque la butée (70) avance vers l'autre vers une position de verrouillage dans laquelle la butée (70) peut être verrouillée par le verrou, le mouvement du levier de commande (50) est limité à une zone entre la position d'ouverture intermédiaire et la position de fermeture.

2. Les ciseaux électriques (10) d'après la revendication 1, **caractérisés par**
les ciseaux électriques (10) étant configurés de telle sorte que lorsque l'élément entraîné (33) se déplace vers la deuxième position, le levier de commande (50) se déplace avec l'élément entraîné (33) vers la position de fermeture, et que lorsque l'élément entraîné (33) se déplace vers la première position, le levier de commande (50) se déplace avec l'élément entraîné (33) vers la position d'ouverture,
sachant que le mouvement du levier de commande (50) vers la position d'ouverture est limité par une partie supérieure de la butée (70) reposant contre le verrou (11b) dans la direction du mouvement de va-et-vient linéaire lorsque le levier de commande (50) se trouve dans la position d'ouverture intermédiaire.

3. Les ciseaux électriques (10) d'après la revendication 1 ou 2, **caractérisés en ce que**
la butée (70) est supportée de manière pivotante par le levier de commande (50) pour avancer vers et reculer depuis le boîtier (11).

4. Les ciseaux électriques (10) d'après l'une quelconque des revendications de 1 à 3, **caractérisés en ce que**
le boîtier (1) inclut une pluralité de verrous (11b) de manière que le levier de commande (50) présente une pluralité de positions d'ouverture intermédiaires, et
qu'un angle de pivotement de la butée (70) est modifié pour verrouiller sélectivement la butée (70) dans l'un des verrous (11b), amenant ainsi sélectivement le levier de commande (50) à une des positions d'ouverture intermédiaires correspondantes.
